# EUROPEAN PATENT SPECIFICATION

(11) **EP 0 889 697 B1**
(45) Date of publication and mention of the grant of the patent: **08.05.2002**
(21) Application number: 97903992.2
(22) Date of filing: 30.01.1997
(51) Int. Cl.: A41D 31/02, B32B 27/28, D04H 13/00, D06N 7/00

(54) **IMPROVED FLOCKED ARTICLES**
BEFLOCKTE ARTIKELN
ARTICLES FLOQUES AMELIORES

(30) Priority: 20.03.1996 US 618944
(43) Date of publication of application: 13.01.1999
(73) Proprietor: W.L. GORE & ASSOCIATES, INC., Newark, Delaware 19714-9206 (US)
(72) Inventor: NORVELL, Jean, Newark, DE 19713 (US); WAGNER, Philip, L., Chadds Ford, PA 19317 (US)
(74) Representative: Shanks, Andrew
(86) International application number: US9701258
(87) International publication number: WO9734507

(56) References cited:
- EP-A- 0 288 214
- EP-A- 0 445 394
- US-A- 4 035 532
- US-A- 4 353 945
- US-A- 4 459 332
- US-A- 5 543 195

## Description

### FIELD OF THE INVENTION

The present invention relates to novel flocked articles which include an ePTFE material. The flocked article may have any desired shape, such as a flexible sheet, a fabric, a fiber, a flexible or rigid three-dimensional shape, a tube, or the like. Moreover the configuration of the article may be either simple or complex, ranging from a single sheet to a layered structure to a multi-layered, multi-compositional form.

### BACKGROUND OF THE INVENTION

Flocking is the application of fine particles to adhesively prepared surfaces. The fine particles may be either natural or synthetic, and the resulting flocked finish, depending on the nature of the material comprising the flock, imparts decorative and/or functional characteristics to the surface. Flocked materials typically have a velvet-like appearance, which can be enhanced to give a deeper luster or changed to confer a less reflective surface. The changes in appearance and texture can be accomplished based upon the composition and geometry of the flock material chosen.

The technique of flocking can be traced back circa 1000 B.C., and the field of flocking is replete with techniques for achieving desirable flocked finishes, such as matte, high sheen, sculptured surfaces, low friction, high friction, iridescence, colors, etc. Moreover, high strength, abrasion-resistant, and highly durable flocked surfaces are available.

Flocked surfaces have been utilized in a wide variety of textile and industrial applications to achieve decorative and visual appeal, friction modification, wear resistance, sound dampening, heat insulation and thermal stability, increased surface area for filtration and evaporation, transitionless power transmission, liquid retention or dispersal, buffing, polishing and cushioning. Moreover, flocking is a highly desirable manufacturing technique due to the simple, quick and inexpensive nature of the processing.

Ongoing efforts to improve the performance of flocked materials for use in a variety of commercial and industrial applications have resulted in materials with unique properties. For example, fire-resistant and flame-retardant flocked fabrics are taught in U.S. Patent Nos. 5,320,890, and 4,076,878, whereby fire and flame resistant materials are incorporated as components of the flocked fabrics. Moreover, flocked fabrics incorporating bacterial barriers are taught in U.S. Patent Nos. 4,308,303 and 4,353,945.

Flocked fabric laminates for protection against chemical agents are taught in U.S. Patent No. 4,459,332, to Giglia. In this patent, air and water vapor permeable, toxic vapor absorptive fabric materials are formed of (1) a first inactive, woven or non-woven fabric, (2) a first air and water permeable open-celled adhesive foam layer having activated carbon fiber flocking positioned substantially perpendicular to the surface thereof away from the first layer of fabric and activated carbon powder deposited in the voids formed between the flocking, (3) a second air and water vapor permeable open-celled adhesive foam layer, and (4) a second inactive, woven or non-woven fabric. In one embodiment, the inactive, woven or non-woven fabric layers may be rendered hydrophobic by coating with porous silicone film or a polymer such as polytetrafluoroethylene.

U.S. Patent No. 5,126,182, to Lumb et al., corresponding to EP-A-445 394 is directed to a drapable, water vapor permeable, wind and water resistant composite fabric comprising a fabric substrate, a foamed water vapor porous adhesive of acrylic latex or acrylic polyurethane, an adhesive barrier material, such as aluminum wax, to keep the adhesive substantially in the surface region of the fabric, and a layer of flock fibers or a fabric layer adhered to and covering the adhesive layer.

These patents are representative of flocking fabrics which have been adapted to meet a variety of needs. However, to date, the art has been unable to provide a simple, economical process for the production of novel, water resistant, breathable articles having flocked surfaces which are lightweight, resilient, insulative, and with increased surface area and expanded functionality for use in a virtually unlimited number of textile and industrial applications.

Accordingly, it is a purpose of the present invention to provide novel flocked articles comprising an expanded polytetrafluoroethylene as at least one component thereof.

Moreover, it is a further purpose of the present invention to provide novel flocked fabric assemblies which are more lightweight and insulative with a greater surface area than conventional fabrics, while providing enhanced tailorability to suit a desired need in a highly economical manner.

It is a further purpose of the present invention to provide novel flocked articles for application in a variety of industrial products for such applications as filtration, insulation, and the like.

These and other purposes of the present invention will become evident based upon a review of the following specification.

### DISCUSSION OF COMMONLY OWNED PATENTS

One material which has exhibited extremely beneficial properties is an ePTFE as disclosed in U.S. Patent Nos. 3,953,566, 3,962,153. 4,064,214, 4,096,227, 4,187,390 and 4,902,423, all assigned to W. L. Gore and Associates, Inc. This ePTFE material comprises a microporous structure of microscopic polymeric fibrils (i.e., thread-like elements) interconnecting polymeric nodes (i.e., particles from which the fibrils emerge). As the term "expanded PTFE" is used herein, it is intended to include any PTFE material having a node and fibril structure, including in the range from a slightly expanded structure having fibrils extending from relatively large nodes of polymeric material, to an extremely expanded structure having fibrils merely intersecting with one another at nodal points.

Expanded PTFE has a number of important properties which make it particularly desirable as a component in a wide variety of textile and industrial applications. First, ePTFE is a highly inert material that is hydrophobic. Accordingly, the material is resistant to interactions with liquid water or other water-based liquids which it may come into contact with during use. Additionally, by expanding PTFE in the manner taught by U.S. Patent No. 3,953, 566 to form the node and fibril structure, the material undergoes a significant increase in tensile strength and becomes highly flexible. Further, the material can be formed in many convenient to use forms, such as tapes, membranes, tubes, rods, three-dimensional shapes, etc.

Incorporation of a filler into an expanded PTFE matrix during the processing is possible, such as disclosed in U.S. Patent No. 4,985,296. This technique, among other things, maintains access to surface area of the filler by suspending filler particles by fine strands of ePTFE. Handling of the fillers is simplified owing to the flexible nature of the expanded PTFE/filler composite, as compared to use of the fillers in powder form.

Materials which incorporate, at least in part, the expanded PTFE disclosed in the commonly owned patents mentioned above have been developed to optimize material performance under various conditions. For example, U.S. Patent Nos. 4,194,041, 5,026,591, 5,391,426, 5,385,694, 5,376,441, and 5,460,872 are directed to materials which optimize material performance when subjected to specific environmental conditions.

### SUMMARY OF THE INVENTION

The present invention relates to novel flocked articles which include a substrate comprising an ePTFE material, thereby imparting beneficial features to the flocked materials which were heretofore unachievable.

The flocked articles may have any desired geometry, such as a flexible sheet, a fabric, a flexible or rigid three-dimensional shape, a tube, and the like. Moreover, the configuration of the flocked articles may be either simple or complex, ranging from a single sheet to a layered structure to a three-dimensional structure, and having a homogeneous or multi-compositional form.

### BRIEF DESCRIPTION OF THE DRAWINGS

The foregoing summary, as well as the following detailed description of the invention, will be better understood when read in conjunction with the appended drawings. For purposes of illustrating the invention, there is shown in the drawings an embodiment which is presently preferred. It should be understood, however, that the invention is not limited to the precise arrangement and instrumentality shown. In the drawings:
Figures 1A and 1B are schematics of the cross-section of flocked articles which may be produced in the present invention;
Figure 2 is a schematic of the cross-section of a flocked article which may be produced in the present invention;
Figure 3 is a schematic of the cross-section of a flocked article which may be produced in the present invention;
Figure 4 is a schematic of the cross-section of a flocked article which may be produced in the present invention;
Figure 5 is a side view of a flocked article which may be produced in the present invention.

### DETAILED DESCRIPTION OF THE INVENTION

The present invention relates to novel flocked articles according to claim 1. These articles may include as at least one component of the article a water resistant, wind resistant, breathable portion. The water resistant, wind resistant, breathable portion may be in the form of a membrane, layered structure or composite which is either porous or nonporous, which can also be air permeable or air impermeable, hydrophilic, hydrophobic and/or oleophobic. Moreover, the presence of a flocked particle layer on the surface of the article provides an increased surface area relative to articles which do not have a flocked surface.

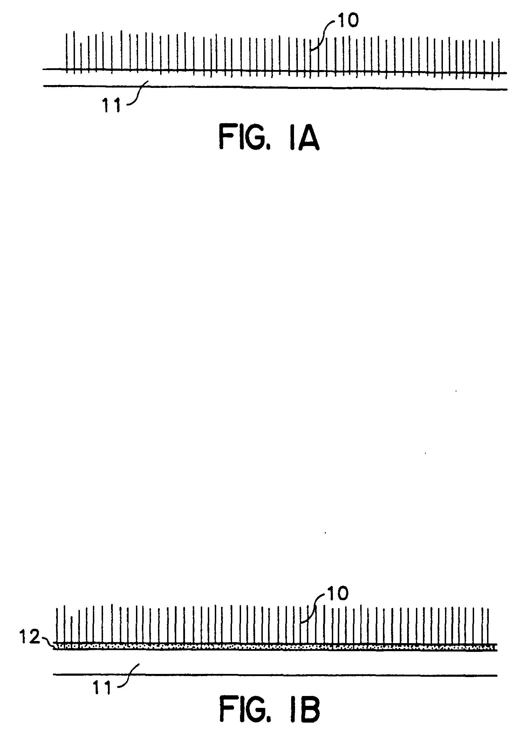

The articles of the present invention may comprise either simple or complex configurations. According to the present invention, the novel flocked article comprises a substrate material having flock particles adhered to at least a portion of a surface of the substrate. As shown in Figure 1A, the flock particles 10 may be adhered by at least partially embedding the particles within the substrate 11, or, alternatively, as shown in Figure 1B, the flock particles 10 may be adhered to the substrate 11 by one or more adhesive materials 12. In this embodiment, at least one of the substrate and the flock particles comprises a water resistant, wind resistant, breathable material.

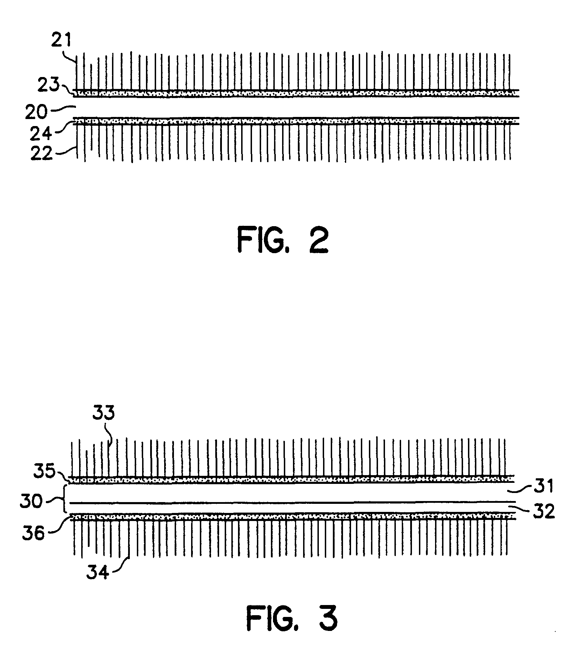

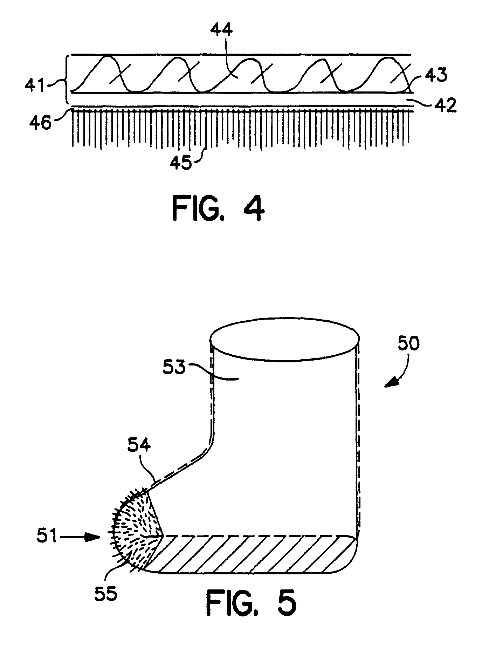

In an alternative embodiment of the present invention, the flocked article may comprise a more complex configuration, wherein the substrate may, for example, comprise one or more layers having the same or different compositions. Moreover the flock particles may be adhered to only a portion of a surface of the substrate, may be adhered to multiple surfaces of the substrate or may cover the entire surface of the substrate. For example, Figure 2 shows a substrate 20 which contains flock particle layers 21 and 22 adhered by adhesive layers 23 and 24 to both sides of substrate 20. Alternatively, as shown in Figure 3, the substrate 30 may comprise multiple layers 31 and 32, which may have either the same composition or different compositions, as shown, to which flock particle layers 33 and 34 are attached by adhesive layers 35 and 36, respectively. Moreover, it is contemplated that the configuration of the flocked article may be tailored to achieve a virtually unlimited combination of features and properties. For example, in one preferred embodiment, as shown in Figure 4, the flocked article 40 may comprise a substrate 41 comprising a water resistant, wind resistant, breathable layer 42 adhered by adhesive layer 43 to an knit fabric layer 44, and the flocked particle layer 45 is adhered to the substrate 41 by adhesive layer 46. Thus, the resulting article comprises a flocked surface on one side of the article and a knit material on the other surface of the article.

In another embodiment of the present invention, the flocked article may comprise a complex, three-dimensional article having seams, holes, edges or the like which require sealing or reinforcement to, for example, insure water resistance and/or wind resistance. One technique to achieve this result may be to apply a sealing material, such as, for example, a water resistant tape over the stitching of a seam or over a hole. One example of a suitable sealing material is GORE-SEAM™ tape, available from W. L. Gore and Associates, Inc., Elkton, MD, which is adhered over the seam or hole in the article. Alternatively, such regions may be heat sealed to form a water resistant seal. The sealed article is then at least partially covered with a flocked particulate layer, thus covering the sealed seam or region so that the sealed region is indistinguishable from the surrounding flocked surface of the article. For example, as shown in Figure 5, a complex flocked article 50 comprising an inverted sock or boot having an interior surface 53 and a seam 54 is shown. Specifically, in this Figure, the toe portion 51 of the interior of the sock 50 includes a flock layer 55 covering the interior surface 53 and the seam 54 of the toe portion 51. Depending on the desired end use, either the entire surface or only selected portions of the article may include a flocked layer.

Substrates of the present invention may comprise a wide variety of compositions, ranging from natural to synthetic materials, and a virtually unlimited number of possible combinations may be envisioned. Suitable substrates may comprise natural or synthetic materials and may be in the form of fabrics, wovens, nonwovens, knits, films, membranes, papers, plastics, foams, suedes, pile, fleece, fur, and the like. Suitable materials for such substrates include, but are not limited to, nylons, cottons, rayons, acrylics, cellulose acetates, polymers such as polyesters, copolyesters, fluoroelastomers, polyurethanes including thermoplastic polyurethanes, block copolymers such as styrenics, copolyesterethers, copolyetheresteramides, fluoroelastomers and olefinics, copolyetherpolyesters, copolyetherurethanes, polyethylenes, polypropylene, polycarbonates, polymethylmethacrylate, polyvinylchlorides, polyvinylidene fluoride, polysulfone, polystyrenes, polyolefins, ultra-high molecular weight polyethylenes, modacrylics, Nomex®, Kevlar®, Teflon®, Panox®, wool, inorganics, organics, wood, metals, ceramics, flame retardant materials, materials comprising antimicrobial agents or functional agent, carbon, graphite, polyphenylene sulfide, fiberglass, rubbers, vinyls, leatherboard, treated substrates, such as those which are treated with a water repellent finish, and the like.

The substrate may have any desired geometry, such as a flexible sheet or fabric, a rigid or flexible three-dimensional shape, a tube, or the like. Moreover, the configuration of the substrate may be either simple or complex, ranging from a single, flat sheet to multi-layered and three-dimensional structures, and having a homogeneous or multi-compositional form.

The flock material of the present invention may be of any suitable length and/or thickness. For the purposes of the present invention, the term "flock particle" will be used herein for convenience and is meant to include particles of any aspect ratio and thus includes particles, chopped fibers, whiskers, powders, spheres, filaments or tows, aggregates, fibrils (i.e., finely divided, highly oriented offshoots from refining a larger filament), pulp, linter (e.g., very short, random cotton or wood), hollow fibers, filled fibers, coated fibers, microfibers, bristles, and the like. Moreover, the flock particles may be either random-cut or precision-cut to a specified length. High ratios of length to denier (L/D) result in a softer pile finish on the flocked surface.

A wide variety of flock materials may be used in the method of the present invention. For example, the flock particulates may be either natural or synthetic, and may comprise a wide variety of compositions such as nylon, cotton, rayon, leather, acrylic, modacrylics, polymers such as polyesters, polyurethanes, polyethylenes, polypropylenes, polytetrafluoroethylenes, Teflon®, aramids, such as Nomex®, etc., Kevlar®, spandex, such as Lycra ®, wool, inorganics, organics, wood, metals, ceramics, flame retardant materials, materials comprising antimicrobial agents or functional agent, materials which provide nuclear, biological and chemical protection (NBC), such as, for example, carbon fibers, carbon-filled materials and carbon-coated fillers, other coated flocks such as metal-coated or otherwise coated- flock, and mixtures thereof. Typical flock materials include polyesters, polypropylene, acrylics and modacrylics, cotton, Teflon®, Panox®, Nomex®, Kevlar®, carbon, polyphenylene sulfide, fiberglass, expanded polytetrafluoroethylene and metal-coated glass.

The sizes of the flock particulate can vary widely depending on the composition of the flock and the desired properties of the flocked articles. Exemplary sizes for the flock particulates range from 0.010 inch (0.254 mm) to 0.20 inch (5 mm) and exemplary ranges of denier (L/D) is from about 1.5 to about 20. However, depending on the desired use of the flocked articles of the present invention, the possible ranges may be even wider. Moreover, multiple sizes and/or dimensions of flock particulate may be combined in a given article to achieve a desired pattern or characteristic of the article.

In the case of flock particles which are in the form of filaments or tows, the filaments may be straight, curled, crimped or twisted to achieve a desired surface effect, although straight filaments are typically used to achieve a smooth finish to the flocked surface.

In a particularly preferred embodiment, the water resistant, wind resistant, breathable portion of the present invention comprises an ePTFE material, thereby imparting beneficial features to the flocked materials which were heretofore unachievable. The ePTFE material is present as at least one component of the substrate to which the flocked particulate is adhered. Also, it may be present as at least one component of the flock particulate; or as at least one component of both the substrate and the flock material.

A preferred ePTFE material which may be used in the present invention comprises an ePTFE membrane which includes an expanded network of polymeric nodes and fibrils made in accordance with the teachings of the United States Patents 3,953,566, 3,962,153, 4,096,227, 4,187,390 and 4,092,423. This material is commercially available in a variety of forms from W. L. Gore & Associates. Inc., of Elkton, MD, under the trademark GORE-TEX®.

As a flock particulate material, the ePTFE may have any desired size and denier required to meet a specific need. Moreover, more than one size of the ePTFE flock material may be used together to achieve a desired surface finish of the flock layer. Further, the ePTFE flock may be used in combination with other compositions of flock particulate to achieve, for example, water resistance, wind resistance, breathability and greater surface area, in combination with, for example, a specific appearance, surface texture, or the like.

In addition to the ePTFE being a component of the flock material, the ePTFE is at least one component of the substrate. For example, the substrate may be a single sheet of expanded PTFE membrane to which the flock particulate is adhered on either one or both sides. Alternatively, the substrate may comprise a multi-layered structure in which one or more components comprise ePTFE. For example, a surface of an ePTFE substrate layer may be flocked either prior to or after attachment to another layer of the substrate, such as by lamination or other conventional technique.

The flock particles may be adhered to the substrate by either providing a separate adhesive material or by conditioning the surface of the substrate to have adhesive properties which permits the flock particles to adhere directly to the substrate without the use of an adhesive. For example, in the case of a substrate comprising a curable polymer, the surface of the substrate to be flocked may be provided in an uncured, "sticky" state such that the flock particles will adhere to the substrate. Subsequently, the substrate may be cured to a final state with the flocked layer securely adhered to the substrate.

Alternatively, the particles may be adhered to the substrate by an adhesive which is typically coated onto the substrate prior to the flocking process. Adhesives which may be used in the present invention can vary widely depending on the compositions of the flocking components, the flocking conditions used, the desired properties of the final articles, etc. Many suitable adhesives are available such as, for example, water and solvent based adhesives including polyvinyl acetate, styrene butadiene, butadiene acrylonitrile, acrylamides, epoxies, urethanes, those adhesives based on polyesters, particularly isocyanate-modified polyesters, or pure polyesters, in organic solvents, cross-linked with polyfunctional isocyanates, synthetic latex polymers such as self-cross-linking acrylics, plastisols, fluoropolymers, modified fluoropolymers, chemically reactive-, surface active- and absorptive polymers, conductive adhesives such as metal powder-filled adhesives (e.g., copper filled epoxy, and the like), flame retardant adhesives such as vinyl chloride polymers, acrylic and modacrylic adhesives, and the like.

The adhesive may be applied to the substrate by any of a number of conventional techniques, including silk-screening, stenciling, brushing, spraying, printing, roller coating, dipping, pressure application (i.e., in the case of pressure sensitive adhesives), knife-edge doctor blade application, electrostatic deposition, or any other suitable technique. Moreover, the adhesive may be applied in either a continuous or a discontinuous pattern.

Flocking of the particulates onto the substrate may be achieved by any suitable means, such as electrostatic, mechanical or other appropriate means provided at least a portion of the flock particulate stands on end. Generally, whatever the means, the process comprises depositing a mass of flock particulates onto the substrate and causing them to adhere thereto. The main types of suitable flocking processes include (1) a mechanical process comprising spraying the fibers onto an adhesive-coated substrate, (2) a further mechanical process comprising sifting the fibers onto an adhesive-coated substrate and vibrating the substrate by the action of beater-bars to cause the fibers to stand on end and penetrate the adhesive, and (3) an electrostatic process in which the lines of force of an electrostatic field are used to propel and guide the fibers from a hopper to an adhesive-coated substrate, and (4) a combination of the electrostatic and mechanical processes set forth above.

As mentioned earlier herein, flocking may be carried out on either simple or complex geometries. For example, in a specific embodiment where large quantities of flocked fabric, such as roll goods, are to be made, it may be more convenient and/or economical to carry out the flocking step in a continuous manner over the surface of the fabric roll. Alternatively, in applications where complex flocked garments, such as gloves or socks are to be made, it may be more desirable to flock the articles after they are formed into the final shapes, thus allowing complete coverage with the flocked layer of otherwise complex configurations such as seams, corners, glove tips, and the like.

The novel flocked materials of the present invention may be used in a wide variety of textile applications. Specifically, the flocked materials of the present invention are appropriate for any textile applications which currently utilize flocked fabrics, but which would benefit from the added features that the water resistant, wind resistant, breathable components would contribute. Moreover, the present invention is also applicable for materials which do not conventionally include a flocked layer, but which require e.g., insulative or other properties which the novel flocked articles of the present invention may provide. Finally, the flocked articles of the present invention may be used in applications where the use of the flocked layer provides equivalent or better performance of the articles, while also providing cost advantages over conventional materials and formation techniques.

For example, a wide variety of beneficial uses of the novel flocked materials may include, but are not limited to, outerwear garments, including coats, jackets, footwear, socks, hats, ear coverings, headbands, gloves, scarves, and the like, to protect against the elements such as cold, wind, water, and the like. The novel flocked articles of the present invention may be incorporated into such outerwear to provide enhanced water resistance wind resistance, breathability, insulation, tactility, fire resistance, chemical protection, noise reduction (e.g., for situations such as hunting and the like, where the water resistant, wind resistant, breathable materials provide equivalent or better performance, but with less noise during movement than the stiffer, louder materials which are conventionally used).

Moreover, as mentioned earlier herein, the flock particles may comprise or be coated with, for example, oleophobic materials, flame retardants, NBC protection materials, UV protectants, and abrasion resistant materials (e.g., Kevlar, etc.) to protect against specific environments or threats to which a person may be exposed.

Further, as mentioned earlier herein, the surface appearance of a flocked material may be tailored to achieve a desired density, surface finish, color, shading, pattern, tactility, weight, and the like, by, for example, combining flock particulate of varying sizes, compositions, colors, geometries, and the like.

Moreover, filled flock materials and/or filled substrates, such as those expanded PTFE materials made in U.S. Patent No. 4,985,296, may be incorporated into the novel articles of the present invention to achieve a desired result. Alternatively, particulate materials, such as carbon and the like, may be adhered to one or more outer surface of the flock particulate, such as for example by the technique disclosed in U.S. Patent No. 5,391,426, and other similar materials, in order to provide, for example, protective character to the flocked articles.

Further applications for the novel articles of the present invention include the fields of personal hygiene, such as for undergarments and the like, medical devices such as socks for orthopedic support, for cushioning such as in the case of diabetics with foot wounds or conditions, etc., cast inner liners, bandages with flocked surface to be placed be next to wounds, and other similar devices.

Moreover, the novel materials of the present invention may provide enhanced performance in a number of industrial applications, including filtration applications, providing not only increased surface area for adsorption/reaction, etc., but also depth filtration where there are gradations in the sizes of the openings, so that larger filtered particulates are trapped at the external periphery of the flocked fibers, tailored wettability, gas diffusers in which the flocked surface of the diffuser prevents gas bubble coalescence on the surface, electrostatic air cleaners, bioprocessing and the like.

Further, a variety of other miscellaneous industrial applications for the novel materials of the present invention are contemplated, such as controlled liquid delivery applications including office automation equipment and the like, fuel cells, enhanced sealing applications due to, for example, higher compressability, better EMI shielding efficiency and, possibly, radar absorbency via the use of conductive flocked fibers, possibly in conjunction with a metallized expanded PTFE membrane.

The present invention provides a number of significant improvements over the flocked articles of the prior art. First, flocked fabrics according to the present invention are expected to exhibit enhanced resilience, lighter weight, better tactility, better abrasion resistance, greater surface area and equal or better insulation properties and compared to conventional flocked fabrics.

Second, in filtration applications, the presence of a flocked surface can provide a significant increase in the surface area for filtration and retention of active fillers.

Without intending to limit the scope of the present invention, the apparatus and method of using the present invention may be better understood by referring to the following examples:

### Example 1

A first substrate, comprising a layer of expanded PTFE membrane, described in U.S. Patent Nos. 3,953,566, 3,962,153 and 4,187,390, and a second substrate layer, comprising a first layer of expanded PTFE, a second layer of hydrophilic polyurethane, and a third layer of 1.5 oz. per yd.² (0.005 g per cm²) nylon tricot knit, described in U.S. Patent No. 4,194,041, were coated on the expanded PTFE with a layer of pressure sensitive adhesive from a roll backed with adhesive paper. Specifically, the roll of adhesive was unwound, exposing the adhesive layer, and the adhesive was then adhered to the expanded PTFE membrane side of the substrates by hand pressure. The substrates, with the release paper still in place, were then inserted between nip rolls to eliminate any air pockets which had formed during the adhering step. The release paper was then removed, leaving an open adhesive surface on each substrate.

Each coated substrate was then placed, with the adhesive side up, on a grounded metal plate in an air hood. A CP Electrostatic Flocking Unit, made by Cellusuede Products, Rockford, Illinois, was then filled with a nylon conductive flocking fiber, and the unit was turned on. The unit was held and shaken over the substrate, and the flock particles deposited on the adhesive via the creation of an electrostatic charge between the unit and the metal plate. The entire surface of the substrate was covered with a layer of flocked particles, so that no surface of the substrate was visible upon inspection.

The flocked layer on the substrate appeared velvet-like and was soft and drapable.

### Example 2

The substrate comprising an expanded PTFE layer of Example 1, which had been coated on one side with a flocked layer was then coated on the other side of the substrate by repeating the technique of Example 1. Specifically, the unflocked side of the substrate was coated with a pressure sensitive adhesive, as described, and the unflocked side was coated with a nylon conductive flocking fiber, as described in Example 1.

The resulting article comprised an expanded PTFE substrate coated on both sides with a flocked layer.

### Example 3

The procedure of Example 1 was repeated, except that the adhesive comprised a spray adhesive comprising Super 77 aerosol, manufactured by 3M, Midland, Ml.

### Example 4

A substrate material comprising a first layer of expanded PTFE, a second layer of hydrophilic polyurethane, and a third layer of 1.5 oz. per yd.² (0.005 g per cm²) nylon tricot knit, described in U.S. Patent No. 4,194,041, was cut and sewn in the shape of a sock, with the expanded PTFE layer on the interior portion of the substrate sock. The sock was inverted to reveal the membrane surface, and a foot form covered with a piece of aluminum foil was placed inside the inverted sock. The expanded PTFE surface of the sock was coated with a spray adhesive comprising Super 77 aerosol, manufactured by 3M, Midland, Ml.

A CP Electrostatic Flocking Unit, made by Cellusuede Products, Rockford, Illinois, was then filled with a nylon conductive flocking fiber, and the unit was turned on. The unit was held and shaken over the substrate, and the flock particles deposited on the adhesive via the creation of an electrostatic charge between the unit and the metal plate. The entire surface of the substrate was covered with a layer of flocked particles.

The flocked layer on the substrate appeared velvet-like and was soft and drapable.

### Example 5

Example 4 was repeated, except that the substrate material was cut and manufactured in the shape of a glove.

## Claims

1. A flocked article comprising
a substrate (11) comprising expanded PTFE; and
at least one layer of flock particulate (10) attached to at least a portion of said expanded PTFE to form a flocked surface, wherein at least a portion of the flock particulate stands on end.

2. The flocked article of claim 1, wherein said substrate (11) further comprises at least one adhesive layer (12) attaching said flock particulate to said expanded PTFE.

3. The flocked article of claim 1, wherein said substrate (11) further comprises at least one material (44) selected from the group consisting of fabrics, wovens, nonwovens, knits, films, membranes, papers, plastics, foams, suedes, pile, fleece and fur.

4. The flocked article of claim 1, wherein said substrate (11) further comprises at least one material selected from the group consisting of polyesters. copolyesters, fluoroelastomers, block copolymers, copolyesterethers, copolyetheresteramides, olefinics, copolyetherpolyesters, copolyetherurethanes, polyethylenes, polypropylene, polycarbonates, polymethylmethacrylate, polyvinylchlorides, polyvinylidene fluoride, polysulfone, polystyrenes, polyolefins. modacrylics, aramids and polyacrylonitriles.

5. The flocked article of claim 2, wherein said at least one adhesive layer comprises a continuous layer of adhesive.

6. The flocked article of claim 2, wherein said at least one adhesive layer comprises a discontinuous layer of adhesive.

7. The flocked article of claim 1, wherein said expanded PTFE further comprises an oleophobic coating on at least a portion thereof.

8. The flocked article of claim 1, wherein said article comprises a water resistant, wind resistant, breathable garment.

9. The flocked article of claim 1, wherein said article comprises a wound care device.

10. The flocked article of claim 1, wherein said article comprises a filtration device.

11. The flocked article of claim 1, wherein said article comprises a gas diffuser.

## Patentansprüche

1. Beflockter Gegenstand, umfassend
ein Substrat (11), das expandiertes PTFE umfaßt, und
mindestens eine Schicht aus Flockenteilchenmaterial (10), befestigt an mindestens einem Teil des expandierten PTFE, um eine geflockte Oberfläche zu bilden, wobei zumindest ein Teil des Flockenteilchenmaterials endseitig aufrecht steht.

2. Gegenstand nach Anspruch 1, bei dem das Substrat (11) außerdem mindestens eine Klebstoffschicht (12) aufweist, die das Flockenteilchenmaterial an dem expandierten PTFE befestigt.

3. Gegenstand nach Anspruch 1, bei dem das Substrat (11) außerdem mindestens ein Material (44) aufweist, welches ausgewählt ist aus der Gruppe Stoffe, Webstoffe, ungewebte Stoffe, Strickstoffe, Filme, Membranen, Papiere, Kunststoffe, Schäume, Velourleder, Frottee, Vlies und Pelz.

4. Gegenstand nach Anspruch 1, bei dem das Substrat 11 außerdem mindestens ein Material aus folgender Gruppe aufweist: Polyester, Copolyester, Fluorelastomere, Block-Copolymere, Copolyesterether, Copolyetheresteramide, Olefine, Copolyetherpolyester, Copolyetherurethane, Polyethylene, Propylene, Polycarbonate, Polymethacrylate, Polyvinylchloride, Polyvinylidenfluorid, Polysulfon, Polystryrol, Polyolefine, Modacryle, Aramide und Polyacrylonitrile.

5. Gegenstand nach Anspruch 2, bei dem die mindestens eine Klebstoffschicht eine durchgängige Klebstoffschicht aufweist.

6. Gegenstand nach Anspruch 2, bei dem die mindestens eine Klebstoffschicht eine diskontinuierliche Klebstoffschicht aufweist.

7. Gegenstand nach Anspruch 1, bei dem das expandierte PTFE weiterhin eine oleophobe Beschichtung auf zumindest einem Teil von ihm aufweist.

8. Gegenstand nach Anspruch 1, bei dem der Gegenstand ein wasserresistentes, windresistente und atmungsfähiges Bekleidungsstück aufweist.

9. Gegenstand nach Anspruch 1, bei dem der Gegenstand eine Wundpflegeeinrichtung aufweist.

10. Gegenstand nach Anspruch 1, bei dem der Gegenstand eine Filtriervorrichtung aufweist.

11. Gegenstand nach Anspruch 1, bei dem der Gegenstand einen Gasdiffusor aufweist.

## Revendications

1. Article floqué comprenant
un substrat (11) comprenant du PTFE expansé ; et
au moins une couche de particules de flocons (10) fixée à au moins une partie dudit PTFE expansé pour former une surface floquée, où au moins une partie des particules floquées se tiennent à l'extrémité.

2. Article floqué selon la revendication 1, dans lequel ledit substrat (11) comprend en outre au moins une couche adhésive (12) fixant lesdites particules floquées audit PTFE expansé.

3. Article floqué selon la revendication 1, dans lequel ledit substrat (11) comprend en outre au moins un matériau (44) choisi dans le groupe constitué d'étoffes, tissus tissés, tissus non-tissés, tricots, films, membranes, papiers, matières plastiques, mousses, suèdes, velours, polaires et fourrures.

4. Article floqué selon la revendication 1, dans lequel ledit substrat (11) comprend au moins un matériau choisi dans le groupe constitué de polyesters, copolyesters, fluoroélastomère, copolymères en blocs, copolyesteréthers, copolyétheresteramides, oléfiniques, copolyétherpolyesters, copolyétheruréthanes, polyéthylènes, polypropylène, polycarbonates, polyméthyleméthacrylate, chlorures de polyvinyle, fluorure de polyvinylidène, polysulfone, polystyrènes, polyoléfines, modacryliques, aramides et polyacrylonitriles.

5. Article floqué selon la revendication 2, dans lequel ladite au moins une couche adhésive comprend une couche continue de colle.

6. Article floqué selon la revendication 2, dans lequel ladite au moins une couche adhésive comprend une couche discontinue de colle.

7. Article floqué selon la revendication 1, dans lequel ledit PTFE expansé comprend en outre un revêtement oléophobe au moins sur une partie de celui-ci.

8. Article floqué selon la revendication 1, dans lequel ledit article comprend un vêtement perméable à l'air, résistant à l'eau, résistant au vent.

9. Article floqué selon la revendication 1, dans lequel ledit article comprend un dispositif de parage.

10. Article floqué selon la revendication 1, dans lequel ledit article comprend un dispositif de filtration.

11. Article floqué selon la revendication 1, dans lequel ledit article comprend un diffuseur de gaz.
